# FASCICULE DE BREVET EUROPEEN

(11) **EP 3 103 154 B1**
(45) Date de publication et mention de la délivrance du brevet: **25.10.2017**
(21) Numéro de dépôt: 15705680.5
(22) Date de dépôt: 03.02.2015
(51) Int. Cl.: H01M 8/24, C25B 9/18, H01M 8/10

(54) **PROCÉDÉ D'EMPILEMENT D'ASSEMBLAGES MEMBRANE/ELECTRODES SIMPLIFIÉ**
VERFAHREN ZUM VEREINFACHTEN STAPELN VON MEMBRAN-ELEKTRODEN-EINHEITEN
PROCESS FOR FACILITATED STACKING OF MEMBRANE-ELECTRODE ASSEMBLIES

(30) Priorité: 04.02.2014 FR 1450862
(43) Date de publication de la demande: 14.12.2016
(73) Titulaire: Commissariat à l'Energie Atomique et aux Energies Alternatives, 75015 Paris (FR)
(72) Inventeur: POIROT-CROUVEZIER, Jean-Philippe, F-38450 Saint Georges de Commiers (FR)
(74) Mandataire: GIE Innovation Competence Group
(86) Numéro de dépôt international: PCT/FR2015/050250
(87) Numéro de publication internationale: WO 2015/118257

(56) Documents cités:
- EP-A1- 1 826 851
- JP-A- 2005 158 344
- US-A1- 2002 045 087
- US-A1- 2004 018 407
- US-A1- 2006 051 651
- US-B1- 6 358 641

## Description

L'invention concerne les empilements d'assemblages membranes/électrodes, utilisés en particulier dans des réacteurs électrochimiques tels que des piles à combustible ou des dispositifs d'hydrolyse.

Les piles à combustible sont notamment envisagées comme source d'énergie pour des véhicules automobiles produits à grande échelle dans le futur. Une pile à combustible est un dispositif électrochimique qui convertit de l'énergie chimique directement en énergie électrique. Une pile à combustible comprend un empilement en série de plusieurs cellules. Chaque cellule génère une tension de l'ordre de 1 Volt, et leur empilement permet de générer une tension d'alimentation d'un niveau plus élevé, par exemple de l'ordre d'une centaine de volts.

Parmi les types de piles à combustible connus, on peut notamment citer la pile à combustible à membrane d'échange de protons, dite PEM. De telles piles à combustible présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, du carburant tel que du dihydrogène est ionisé pour produire des protons traversant la membrane. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques dites bipolaires, par exemple en métal. Les assemblages membrane/électrodes sont disposés entre deux plaques bipolaires. La pile à combustible comporte ainsi un empilement alternant plaques bipolaires et assemblages membrane/électrodes. Des couches de diffusion gazeuse sont interposées entre les électrodes et les plaques bipolaires et sont en contact avec les plaques bipolaires.

Les plaques bipolaires peuvent comprendre des canaux et orifices d'écoulement pour guider les réactifs et les produits vers/depuis la membrane, pour guider du liquide de refroidissement, et pour séparer différents compartiments. Les plaques bipolaires sont également électriquement conductrices pour former des collecteurs des électrons générés au niveau de l'anode. Les plaques bipolaires ont également une fonction mécanique de transmission des efforts de serrage de l'empilement, nécessaire à la qualité du contact électrique. Une conduction électronique est réalisée à travers les plaques bipolaires, une conduction ionique étant obtenue à travers la membrane. L'empilement des cellules est comprimé entre des plaques terminales.

La séparation des différents compartiments est indispensable au bon fonctionnement de la pile à combustible. Une telle séparation fait généralement appel à des joints comprimés entre les plaques bipolaires. La précision géométrique de l'assemblage de l'empilement est importante pour garantir son étanchéité et ses performances. Il est notamment important de garantir la précision de l'alignement entre les joints et les plaques bipolaires et la précision dans l'alignement des points de conduction du courant électrique produit.

Le brevet FR2897986 décrit l'utilisation d'un empilement traversé de part en part par deux orifices. Des barres cylindriques de centrage sont logées dans ces orifices et présentent une longueur au moins égale à l'épaisseur de l'empilement. La combinaison des barres cylindriques et des orifices garantit l'alignement des différentes plaques bipolaires et assemblages membrane/électrodes de l'empilement. Les barres cylindriques ont une surface en matériau isolant pour éviter une conduction électrique avec les composants de l'empilement.

Les brevets US 2006/051651 et US 6358641 décrivent des procédés de fabrication d'un empilement de piles à combustible utilisant des barres cylindriques de centrage.

Des empilements similaires sont également utilisés pour des électrolyseurs avec de mêmes exigences. De façon générale, il existe un besoin de réduire l'encombrement et le poids de ces empilements, en particulier pour des applications embarquées. Afin de réduire le poids de l'empilement, il est connu d'utiliser de telles barres cylindriques pour exercer une fonction de tirant, en les contraignant en traction entre les plaques terminales.

D'une part, il existe un besoin pour résoudre davantage le poids et l'encombrement de l'empilement. La fonction de tirant impose notamment un dimensionnement relativement important des barres aboutissant à un poids relativement élevé. D'autre part, certaines géométries d'empilement sont incompatibles avec l'utilisation des barres de centrage comme tirants de l'empilement.

L'invention vise à résoudre un ou plusieurs de ces inconvénients. L'invention porte ainsi sur un procédé de fabrication d'un réacteur électrochimique, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple d'empilement d'assemblages membrane/électrodes et de plaques bipolaires pour une pile à combustible;
- la figure 2 est une vue en perspective éclatée de plaques bipolaires et d'un assemblage membrane/électrodes destinés à être empilés pour former des conduits d'écoulement à travers l'empilement ;
- la figure 3 est une vue de dessus d'une plaque bipolaire comportant des orifices d'écoulement traversés par des tubes ;
- la figure 4 est une vue en coupe transversale d'un exemple de tube ;
- la figure 5 est une vue en coupe transversale du tube de la figure 4 à l'intérieur duquel un raidisseur est disposé ;
- les figures 6 à 8 sont des vues en perspective de différentes variantes de tubes ;
- les figures 9 et 10 illustrent des exemples de circuits d'écoulement pouvant être formés à travers l'empilement par l'intermédiaire de tubes ;
- la figure 11 est une vue en coupe de côté d'un tube emboîté dans un premier exemple d'une plaque terminale ;
- la figure 12 est une vue en coupe de côté d'un tube emboîté dans un deuxième exemple d'une plaque terminale ;
- la figure 13 est une vue de dessus d'un réacteur électrochimique en cours d'assemblage.

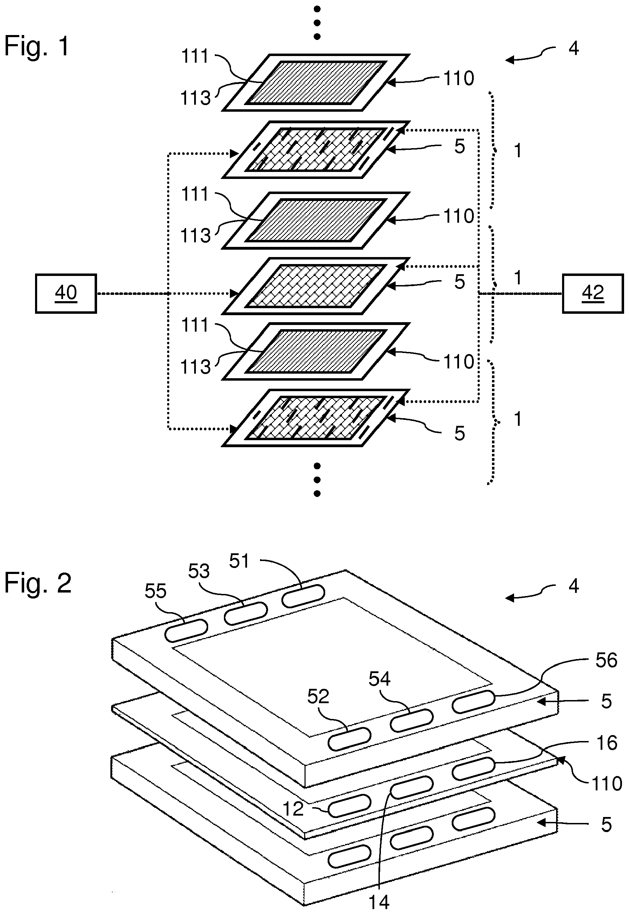

La figure 1 est une vue en perspective éclatée schématique d'un empilement de cellules 1 d'une pile à combustible 4. La pile à combustible 4 comprend plusieurs cellules 1 superposées. Les cellules 1 sont du type à membrane échangeuse de protons ou membrane à électrolyte polymère.

La pile à combustible 4 comprend une source de carburant 40. La source de carburant 40 alimente ici en dihydrogène une entrée de chaque cellule 1. La pile à combustible 4 comprend également une source de comburant 42. La source de comburant 42 alimente ici en air une entrée de chaque cellule 1, l'oxygène de l'air étant utilisé comme oxydant. Chaque cellule 1 comprend également des canaux d'échappement. Chaque cellule 1 présente également un circuit de refroidissement.

Chaque cellule 1 comprend un assemblage membrane/électrodes 110 ou AME 110. Un assemblage membrane/électrodes 110 comprend un électrolyte 113, une cathode 112 (non illustrée) et une anode 111 placées de part et d'autre de l'électrolyte et fixées sur cet électrolyte 113.

Entre chaque couple d'AME adjacents, une plaque bipolaire 5 est disposée. Chaque plaque bipolaire 5 définit des canaux d'écoulement anodiques et des canaux d'écoulement cathodiques. Des plaques bipolaires 5 définissent également des canaux d'écoulement de liquide de refroidissement entre deux assemblages membrane/électrodes successifs. Les plaques bipolaires 5 peuvent être formées de façon connue en soi à partir d'une ou plusieurs tôles métalliques conductrices, par exemple en acier inoxydable, ou en alliage de titane, en alliage d'aluminium, en alliage de nickel ou en alliage de tantale. Les plaques bipolaires peuvent également être obtenues par d'autres procédés comme le moulage ou l'injection à partir de composites carbone-polymère.

La figure 2 est une vue en perspective éclatée de deux plaques bipolaires 5 et d'un assemblage membrane/électrodes destinés à être empilés selon un procédé de fabrication selon l'invention. L'empilement des plaques bipolaires 5 et des assemblages membrane/électrodes 110 est destiné à former une pluralité de conduits d'écoulement. À cet effet, des orifices respectifs sont ménagés à travers les plaques bipolaires 5 et à travers les assemblages membrane/électrodes 110. Les plaques bipolaires 5 comportent ainsi des orifices 51, 53 et 55 au niveau d'une première extrémité, et des orifices 52, 54 et 56 au niveau d'une deuxième extrémité opposée à la première. L'orifice 51 sert par exemple pour former un conduit d'alimentation en carburant, l'orifice 56 sert par exemple pour former un conduit d'évacuation de résidus de combustion, l'orifice 53 sert par exemple pour former un conduit d'alimentation en liquide de refroidissement, l'orifice 54 sert par exemple pour former un conduit d'évacuation de liquide de refroidissement, l'orifice 52 sert par exemple pour former un conduit d'alimentation en comburant, et l'orifice 55 sert par exemple pour former un conduit d'évacuation d'eau.

Les orifices des plaques bipolaires 5 et des assemblages membrane/électrodes 110 sont disposés en vis-à-vis afin de former les conduits d'écoulement. Des orifices 12, 14 et 16 sont par exemple ménagés dans les assemblages membrane/électrodes 110 et sont disposés en vis-à-vis respectivement des orifices 52, 54 et 56. Des joints non illustrés peuvent être interposés entre les plaques bipolaires 5 ou entre les plaques bipolaires 5 et les assemblages membrane/électrodes 110 afin d'assurer une étanchéité à la périphérie de l'empilement ou autour des orifices traversants.

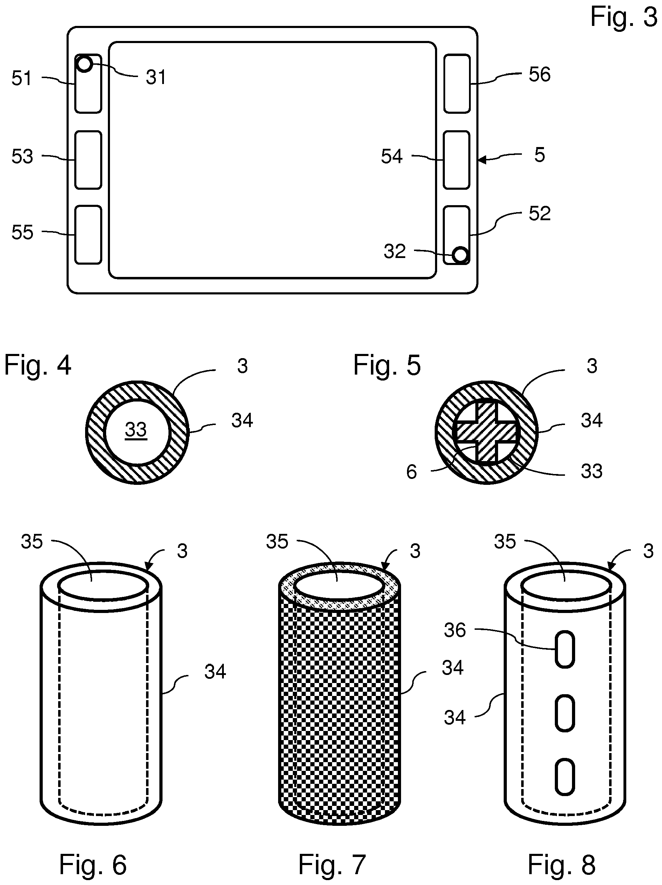

La figure 3 est une vue de dessus d'une plaque bipolaire 5 d'un empilement de la pile à combustible 4 à l'issue de son assemblage. La pile à combustible 4 comporte un tube 31 et un arbre formé d'un tube 32 dans cet exemple. Les tubes 31 et 32 s'étendent selon une même direction. Les tubes 31 et 32 s'étendent selon la direction de l'empilement, c'est-à-dire selon une direction normale aux plaques bipolaires 5 et aux assemblages membrane/électrodes 110. Les tubes 31 traversent des orifices superposés des plaques bipolaires 5 (orifices 51) et des assemblages membrane/électrodes 110, formant un conduit d'écoulement. Les tubes 32 traversent des orifices superposés des plaques bipolaires 5 (orifices 52) et des assemblages membrane/électrodes 110 (orifices 12), formant un conduit d'écoulement.

La figure 4 illustre une vue en coupe transversale d'un tube 3 pouvant être utilisée comme tube 31 ou comme tube 32. Le tube 3 est un tube creux et comporte un alésage 33. L'alésage 33 s'étend par exemple sur toute la longueur du tube 32. L'alésage 33 est délimité par une paroi périphérique 34.

L'invention propose d'utiliser au moins un tube 31 et un arbre (ici le tube 32) maintenus en position dans des orifices des plaques bipolaires 5 ou des assemblages membrane/électrodes 110 durant la formation d'un empilement alternant ces plaques bipolaires 5 et ces assemblages membrane/électrodes 110. Durant la formation de l'empilement, une poutre est logée dans l'alésage 33 du tube 31 afin de rigidifier ce tube 31 et ainsi éviter que celui-ci soit déformé ou altéré. Le tube 31 et l'arbre assurent un positionnement relatif des assemblages membrane/électrodes 110 et des plaques bipolaires 5 durant la formation de l'empilement par contact avec des bordures des différents orifices.

À l'issue de la formation de l'empilement, on procède à la compression de cet empilement entre deux composants mécaniques et on retire la poutre hors de l'alésage du tube 31. Du fait du maintien assuré par la poutre durant la formation de l'empilement, le tube 31 peut présenter une paroi 34 peu épaisse aboutissant à un poids réduit après le retrait de la poutre, sans pour autant risquer sa détérioration. Par ailleurs, l'alésage du tube 31 participe à l'écoulement de fluide, ce qui permet de limiter la section des orifices à travers les composants de l'empilement. De plus, la section des orifices traversant les plaques bipolaires et les assemblages membrane/électrodes est ici fonctionnelle puisque traversée par un écoulement des fluides. Du fait de l'utilisation de poutres durant la formation de l'empilement, une paroi 34 peu épaisse peut être utilisée et ainsi favoriser la section optimale de l'alésage 33 pour un écoulement de fluide. Ces composants sont ainsi plus faciles à fabriquer et présentent une plus grande compacité. La section transversale de l'alésage 33 du tube 31 sera avantageusement au moins égale à 50 % de la section transversale de ce tube 31 (c'est-à-dire la surface délimitée par la périphérie de la paroi 34).

Un exemple de poutre 6 est illustré en référence à la vue en coupe transversale de la figure 5. Sur cette figure, une poutre 6 est logée dans l'alésage 33 d'un tube 3. Pour faciliter l'insertion ou le retrait de la poutre 6 dans l'alésage 33, l'ajustement entre cet alésage 33 et la poutre 6 est de préférence de type glissant. Par ailleurs, la poutre 6 pourra présenter toute forme appropriée pour sa section transversale, afin de limiter sa surface de contact et les frottements avec la paroi 34 du tube 3. La poutre 6 pourra présenter par exemple une forme en croix comme illustré, une forme hexagonale ou encore une forme octogonale.

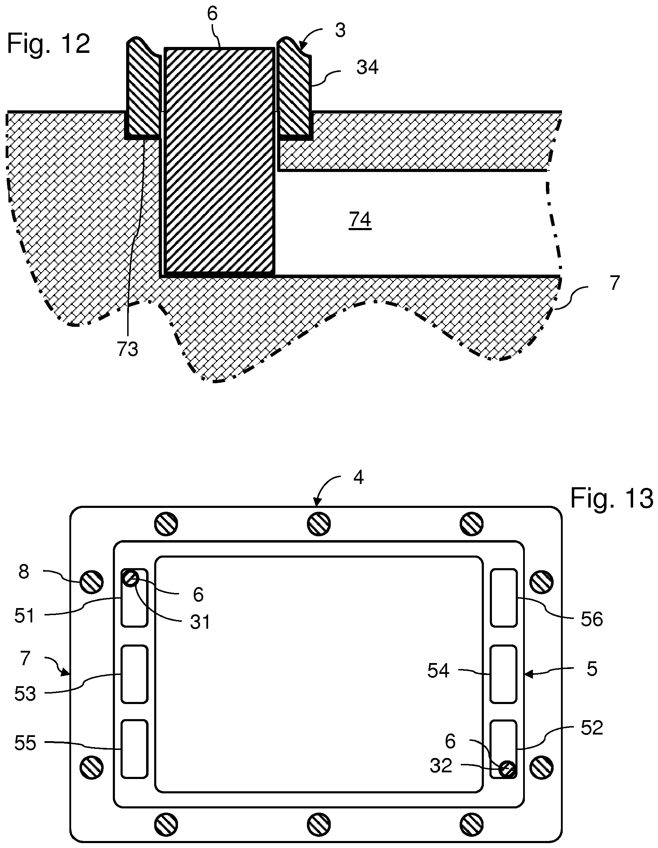

La figure 13 est une vue en coupe de dessus d'une pile à combustible 4 durant la formation d'un empilement d'une alternance de plaques bipolaires 5 et d'assemblages membrane/électrodes 110.

Pour mettre en oeuvre un exemple de procédé de fabrication de la pile à combustible 4, on positionne au préalable un composant mécanique 7, par exemple une plaque terminale. Un tel composant mécanique est notamment destiné à appliquer des efforts mécaniques sur l'empilement avec un minimum de déformations. On fixe ou on maintient en position les tubes 31 et 32 à des extrémités opposées de cette plaque terminale. Un positionnement des tubes 31 et 32 à des extrémités opposées de la plaque terminale 7 favorisera la précision du positionnement entre les différents composants de l'empilement à former. Les tubes 31 et 32 s'étendent perpendiculairement à cette plaque terminale 7. Une extrémité des tubes 31 et 32 est par exemple emboîtée dans un logement respectif de la plaque terminale 7. Par ailleurs, des tirants 8 sont fixés à cette plaque terminale 7. Les tirants 8 s'étendent selon la même direction que les tubes 31 et 32. Les tirants 8 présentent par exemple une extrémité filetée vissée dans la plaque terminale 7. Des poutres 6 sont logées respectivement dans les tubes 31 et 32 afin de les rigidifier.

Un assemblage membrane/électrodes 110 est rapporté de sorte qu'au moins deux de ses orifices soient traversés respectivement par les tubes 31 et 32. Au moins un de ces orifices présente une section transversale supérieure à la section transversale du tube qui la traverse. Les tubes 31 et 32 présentent de préférence chacun au moins un point de contact avec la périphérie de l'orifice respectif qu'ils traversent.

Une plaque bipolaire 5 est rapportée de sorte qu'au moins deux de ses orifices sont traversés respectivement par les tubes 31 et 32. Au moins un de ces orifices présente une section transversale supérieure à la section transversale du tube qui la traverse. Les tubes 31 et 32 présentent de préférence chacun au moins un point de contact avec la périphérie de l'orifice respectif qu'il traverse. Les orifices de la plaque bipolaire 5 sont superposés aux orifices de l'assemblage membrane/électrodes 110.

On poursuit la formation d'un empilement en rapportant de façon similaire des assemblages membrane/électrodes 110 et des plaques de guidage 5, de façon à former une alternance entre ces plaques bipolaires 5 et ces assemblages membrane/électrodes 110.

Du fait des points de contact des orifices respectifs des plaques de guidage 5 et des assemblages membrane/électrodes 110 avec les tubes 31 et 32, on obtient un excellent positionnement relatif entre les différents composants de l'empilement.

Des couches de diffusion gazeuse non illustrées peuvent être interposées entre les plaques de guidage 5 et les assemblages membrane/électrodes 110.

À l'issue de la formation de l'empilement, une autre plaque terminale 7 est rapportée. Cette plaque terminale comporte typiquement des alésages traversants traversés par l'extrémité libre des tirants 8. Une compression de l'empilement entre les plaques terminales 7 est réalisée, par exemple au moyen de vérins, ou par application d'un effort de traction sur les tirants 8. Par exemple, des écrous peuvent être fixés sur l'extrémité libre de chacun des tirants 8, et un vissage de ces écrous est ensuite réalisé de façon à appliquer une compression sur l'empilement.

En cours ou à l'issue de cette compression, les efforts transversaux (par exemple de cisaillement) pouvant être exercés sur les tubes 31 et 32 sont relativement limités, l'assemblage de l'empilement et des plaques terminales 7 par l'intermédiaire des tirants 8 ayant alors une tenue mécanique suffisante. Les poutres 6 peuvent alors être retirées, de façon à alléger la pile à combustible 4 et à libérer les alésages 33 des tubes 31 et 32.

L'alésage 33 des tubes 31 et 32 sont mis en communication avec un circuit d'écoulement de fluide de la pile à combustible. Par exemple, le tube 31 est utilisé pour conduire un écoulement de carburant et le tube 32 est utilisé pour conduire un écoulement de comburant.

Différents types de tubes 3 peuvent être disposés à travers les orifices des plaques bipolaires 5 ou des assemblages membrane/électrodes 110. La figure 6 est une vue en perspective d'un premier exemple de tube 3. La paroi 34 du tube 3 est ici pleine et étanche. L'accès à l'alésage 33 se fait ainsi uniquement par une extrémité libre 35 du tube 3. La figure 7 est une vue en perspective d'un deuxième exemple de tube 3. La paroi 34 du tube est ici pleine et poreuse. L'accès à l'alésage 33 peut ainsi être obtenu sur toute la surface de la paroi 34. La figure 8 est une vue en perspective d'un troisième exemple de tube 3. La paroi 34 comporte ici plusieurs orifices 36 la traversant et répartis sur la longueur du tube 3. Les orifices 36 permettent un accès à l'alésage sur la longueur du tube 3, avec des pertes de charges réduites par rapport à l'exemple de la figure 7. L'utilisation des poutres 6 permet d'utiliser des tubes 3 à paroi 34 poreuse ou percée et présentant alors une rigidité et une résistance mécanique amoindries.

Afin de limiter le poids d'un tube 3, sa section transversale sera avantageusement aussi petite que possible tout en garantissant sa résistance mécanique durant la formation de l'empilement. La section transversale des orifices traversés par un tel tube 3 est avantageusement au moins le triple de la section transversale de ce tube 3.

Pour éviter tout court-circuit entre les plaques bipolaires 5, la surface externe des tubes 31 et 32 est isolante électriquement. Les tubes 31 et 32 peuvent par exemple être revêtus d'une couche isolante électriquement. Les tubes 31 et 32 peuvent également être réalisés en matériaux électriquement isolants. Les tubes 31 et 32 peuvent par exemple être réalisés en matériaux plastiques isolants, par exemple en PTFE. Des poutres 6 en matériau présentant un module d'élasticité nettement plus élevé que celui des tubes 31 et 32 peuvent être utilisées. Des poutres 6 en acier peuvent notamment être utilisées.

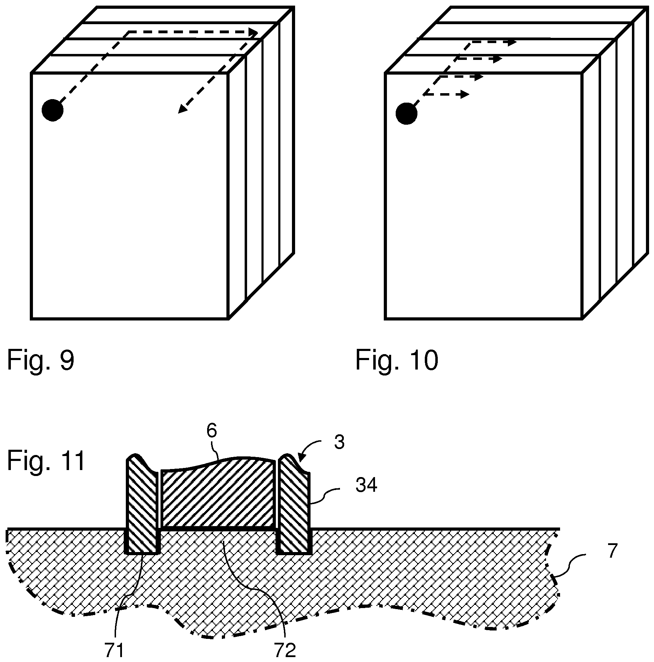

Les figures 9 et 10 illustrent de façon schématique en perspective différents types de circuits d'écoulement pouvant être formés par l'intermédiaire de tubes 3 traversant des orifices de l'empilement. Les circuits d'écoulement sont ici illustrés de façon schématique en trait discontinu.

A la figure 9, un tube étanche traverse l'empilement et conduit un écoulement sur toute la profondeur de l'empilement. Un canal d'écoulement réalisé par exemple dans une plaque terminale communique avec ce tube étanche pour conduire l'écoulement jusqu'à une autre extrémité de l'empilement. Ce canal d'écoulement communique avec un autre tube étanche traversant l'empilement. Une telle configuration permet par exemple d'éviter une connexion fastidieuse à l'extérieur de l'empilement en rapportant des connectiques de circuits d'écoulement au niveau d'une même face de cet empilement. Une telle configuration permet également d'isoler un écoulement de fluide par rapport à des composants de l'empilement ou par rapport à d'autres fluides.

A la figure 10, un tube présentant des orifices dans sa paroi 34 traverse l'empilement. Un tel tube perforé permet de conduire le fluide traversant son alésage aux différents niveaux de l'empilement.

La figure 11 illustre un maintien en position d'un tube 3 sur une plaque terminale 7 durant la formation d'un empilement. La paroi 34 du tube 3 est typiquement emboîtée dans une gorge circulaire 71. Le tube 3 est par exemple un tube tel qu'illustré aux figures 7 et 8. Un plot 72 est ici formé et pénètre dans l'extrémité de l'alésage du tube 3. L'extrémité de l'alésage du tube 3 est ici obturée par le plot 72. La poutre 6 traverse l'alésage du tube 3 sur toute sa longueur et vient buter contre le plot 72.

La figure 12 illustre un maintien en position d'un tube 3 sur une autre plaque terminale 7 durant la formation d'un empilement. La paroi 34 du tube 3 est typiquement emboîtée dans un lamage circulaire 73. Le tube 3 est par exemple un tube tel qu'illustré à la figure 6. Un alésage est ménagé dans la partie médiane du lamage et communique avec un conduit d'écoulement 74 de la plaque terminale 7. La poutre 6 traverse l'alésage du tube 3 sur toute sa longueur et vient buter contre le fonds du conduit d'écoulement 74.

Des tubes de section circulaire ont ici été décrits. D'autres formes pour les sections des tubes peuvent bien entendu être envisagées, en fonction des besoins de l'application.

Dans les exemples décrits, au moins un tube et un arbre traversent les orifices des composants de l'empilement. On peut prévoir qu'au moins trois éléments allongés (des tubes et/ou des arbres) traversent trois orifices des composants de l'empilement pour accroître davantage la précision du positionnement de ces composants. Avantageusement, trois éléments allongés au plus sont utilisés pour éviter d'induire des contraintes inutiles liées à un hyperstatisme de guidage.

La formation de l'empilement peut être réalisée en positionnant les tubes verticalement lors du placement des différents assemblages membrane/électrodes et des plaques bipolaires. Bien qu'un effort de cisaillement supérieur soit alors appliqué sur les tubes, la formation de l'empilement peut également être réalisée en positionnant les tubes horizontalement lors du placement des différents assemblages membrane/électrodes et des plaques bipolaires. Lorsque les tubes sont positionnés horizontalement en vue de former l'empilement, le dimensionnement de ce tube et/ou des poutres qui sont logées est accru afin de pouvoir supporter le poids des différents composants de l'empilement.

L'invention a été illustrée dans les exemples précédents en référence à un réacteur électrochimique formant une pile à combustible 4. L'invention s'applique également à d'autres types de réacteurs électrochimiques incluant un empilement d'assemblages membrane/électrodes et de plaques bipolaires, par exemple un électrolyseur.

## Revendications

1. Procédé de fabrication d'un réacteur électrochimique, comprenant les étapes de :
- maintien en position d'un premier tube (31) et d'un arbre (32) s'étendant selon une même direction, le premier tube comportant un alésage dans lequel une poutre est logée ;
- formation d'un empilement d'une alternance de plaques bipolaires (5) et d'assemblages membranes/électrodes, chaque plaque bipolaire et chaque assemblage membrane/électrodes comportant des premier et deuxième orifices (51,52) traversés respectivement par le premier tube et par l'arbre ;
- compression de l'empilement entre deux composants mécaniques et retrait de la poutre hors de l'alésage du premier tube ;
- mise en communication de l'alésage du premier tube avec un circuit d'écoulement de fluide du réacteur électrochimique.

2. Procédé de fabrication d'un réacteur électrochimique (4) selon la revendication 1, dans lequel ledit arbre (32) est un deuxième tube comportant un alésage (33) dans lequel une poutre (6) est logée durant ladite étape de maintien en position, ladite étape de compression et de retrait incluant en outre le retrait de la poutre hors de l'alésage du deuxième tube (32).

3. Procédé de fabrication d'un réacteur électrochimique (4) selon la revendication 1 ou 2, dans lequel le premier tube (31) et l'arbre (32) maintenus en position présentent une surface externe isolante électriquement.

4. Procédé de fabrication d'un réacteur électrochimique (4) selon l'une quelconque des revendications précédentes, dans lequel les premier et deuxième orifices desdites plaques bipolaires et desdits assemblages membrane/électrodes empilés sont positionnés à des extrémités opposées respectivement de ces plaques bipolaires et de ces assemblages membrane/électrodes.

5. Procédé de fabrication d'un réacteur électrochimique (4) selon l'une quelconque des revendications précédentes, comprenant en outre une étape de maintien en position de premier et deuxième tirants s'étendant parallèlement au premier tube (31), ladite compression de l'empilement étant réalisée par l'application d'un effort de traction sur lesdits premier et deuxième tirants par lesdits premier et deuxième composants mécaniques.

6. Procédé de fabrication d'un réacteur électrochimique (4) selon l'une quelconque des revendications précédentes, dans lequel l'ajustement entre le premier tube (31) et la poutre logée dans son alésage (33) est de type glissant.

7. Procédé de fabrication d'un réacteur électrochimique (4) selon l'une quelconque des revendications précédentes, dans lequel la section du premier orifice (51) des plaques bipolaires (5) et des assemblages membrane/électrodes (110) de l'empilement est au moins le triple de la section transversale du premier tube (31).

8. Procédé de fabrication d'un réacteur électrochimique (4) selon l'une quelconque des revendications précédentes, dans lequel la section transversale de l'alésage (33) du premier tube (31) maintenu en position est au moins égale à 50 % de la section transversale du premier tube (31).

9. Procédé de fabrication d'un réacteur électrochimique selon l'une quelconque des revendications précédentes, dans lequel ledit premier tube (31) maintenu en position comporte une paroi périphérique (34) délimitant ledit alésage (33), ladite paroi périphérique étant poreuse.

10. Procédé de fabrication d'un réacteur électrochimique selon l'une quelconque des revendications 1 à 8, dans lequel ledit premier tube (31) maintenu en position comporte une paroi périphérique (34) délimitant ledit alésage (33), ladite paroi périphérique comportant plusieurs orifices (36) la traversant et répartis selon ladite même direction.

11. Procédé de fabrication d'un réacteur électrochimique selon l'une quelconque des revendications précédentes, comprenant la connexion dudit circuit d'écoulement avec une source de carburant, une source de comburant ou une source de liquide de refroidissement.

12. Procédé de fabrication d'un réacteur électrochimique (4) selon l'une quelconque des revendications précédentes, dans lequel la périphérie de chaque premier orifice (51) desdites plaques bipolaires et desdits assemblages membrane/électrodes de l'empilement formé est en contact avec ledit premier tube (31) et dans lequel la périphérie de chaque deuxième orifice (52) desdites plaques bipolaires et desdits assemblages membrane/électrodes de l'empilement formé est en contact avec ledit arbre (32).

## Patentansprüche

1. Verfahren zur Herstellung eines elektrochemischen Reaktors, welches die folgenden Schritte umfasst:
- Halten eines ersten Rohres (31) und einer Welle (32), die sich entlang derselben Richtung erstrecken, in ihrer Position, wobei das erste Rohr eine Bohrung aufweist, in welcher ein Träger aufgenommen ist;
- Bildung eines Stapels aus einander abwechselnden bipolaren Platten (5) und Membran-Elektroden-Einheiten, wobei jede bipolare Platte und jede Membran-Elektroden-Einheit eine erste und eine zweite (51, 52) Öffnung aufweisen, die von dem ersten Rohr bzw. von der Welle durchquert werden;
- Zusammendrücken des Stapels zwischen zwei mechanischen Komponenten und Herausziehen des Trägers aus der Bohrung des ersten Rohres;
- Herstellung einer Verbindung der Bohrung des ersten Rohres mit einem Fluidströmungskreis des elektrochemischen Reaktors.

2. Verfahren zur Herstellung eines elektrochemischen Reaktors (4) nach Anspruch 1, wobei die Welle (32) ein zweites Rohr ist, das eine Bohrung (33) aufweist, in welcher während des Schrittes des Haltens in der Position ein Träger (6) aufgenommen ist, wobei der Schritt des Zusammendrückens und Herausziehens außerdem das Herausziehen des Trägers aus der Bohrung des zweiten Rohres (32) beinhaltet.

3. Verfahren zur Herstellung eines elektrochemischen Reaktors (4) nach Anspruch 1 oder 2, wobei das erste Rohr (31) und die Welle (32), die in ihrer Position gehalten werden, eine elektrisch isolierende Außenoberfläche aufweisen.

4. Verfahren zur Herstellung eines elektrochemischen Reaktors (4) nach einem der vorhergehenden Ansprüche, wobei die erste und die zweite Öffnung der gestapelten bipolaren Platten und Membran-Elektroden-Einheiten an entgegengesetzten Enden dieser bipolaren Platten bzw. dieser Membran-Elektroden-Einheiten positioniert werden.

5. Verfahren zur Herstellung eines elektrochemischen Reaktors (4) nach einem der vorhergehenden Ansprüche, welches außerdem einen Schritt des Haltens eines ersten und eines zweiten Zugankers, die sich parallel zu dem ersten Rohr (31) erstrecken, in ihrer Position umfasst, wobei das Zusammendrücken des Stapels durch die Ausübung einer Zugkraft auf den ersten und den zweiten Zugankers durch die erste und die zweite mechanische Komponente durchgeführt wird.

6. Verfahren zur Herstellung eines elektrochemischen Reaktors (4) nach einem der vorhergehenden Ansprüche, wobei die Passung zwischen dem ersten Rohr (31) und dem in dessen Bohrung (33) aufgenommenem Träger vom Typ eines Gleitsitzes ist.

7. Verfahren zur Herstellung eines elektrochemischen Reaktors (4) nach einem der vorhergehenden Ansprüche, wobei der Querschnitt der ersten Öffnung (51) der bipolaren Platten (5) und der Membran-Elektroden-Einheiten (110) des Stapels wenigstens das Dreifache des Querschnitts des ersten Rohres (31) beträgt.

8. Verfahren zur Herstellung eines elektrochemischen Reaktors (4) nach einem der vorhergehenden Ansprüche, wobei der Querschnitt der Bohrung (33) des in seiner Position gehaltenen ersten Rohres (31) wenigstens 50 % des Querschnitts des ersten Rohres (31) beträgt.

9. Verfahren zur Herstellung eines elektrochemischen Reaktors nach einem der vorhergehenden Ansprüche, wobei das in seiner Position gehaltene erste Rohr (31) eine die Bohrung (33) begrenzende Umfangswand (34) aufweist, wobei diese Umfangswand porös ist.

10. Verfahren zur Herstellung eines elektrochemischen Reaktors nach einem der Ansprüche 1 bis 8, wobei das in seiner Position gehaltene erste Rohr (31) eine die Bohrung (33) begrenzende Umfangswand (34) aufweist, wobei diese Umfangswand mehrere Öffnungen (36) aufweist, die sie durchqueren und entlang derselben Richtung verteilt sind.

11. Verfahren zur Herstellung eines elektrochemischen Reaktors nach einem der vorhergehenden Ansprüche, welches die Verbindung des Strömungskreises mit einer Quelle von Kraftstoff, einer Quelle eines Sauerstoffträgers oder einer Quelle von Kühlflüssigkeit umfasst.

12. Verfahren zur Herstellung eines elektrochemischen Reaktors (4) nach einem der vorhergehenden Ansprüche, wobei sich der Umfang jeder ersten Öffnung (51) der bipolaren Platten und der Membran-Elektroden-Einheiten des gebildeten Stapels in Kontakt mit dem ersten Rohr (31) befindet, und wobei sich der Umfang jeder zweiten Öffnung (52) der bipolaren Platten und der Membran-Elektroden-Einheiten des gebildeten Stapels in Kontakt mit der Welle (32) befindet.

## Claims

1. Process for manufacturing an electrochemical reactor, comprising steps of:
- holding in position a first tube (31) and a shaft (32) extending in the same direction, the first tube including a bore in which a beam is housed;
- forming a stack of an alternation of bipolar plates (5) and membrane/electrodes assemblies, each bipolar plate and each membrane/electrodes assembly including first and second orifices (51, 52) passed through by the first tube and by the shaft, respectively;
- compressing the stack between two mechanical components and removing the beam from the bore of the first tube;
- bringing the bore of the first tube into communication with a fluid flow circuit of the electrochemical reactor.

2. Process for manufacturing an electrochemical reactor (4) according to Claim 1, wherein said shaft (32) is a second tube including a bore (33) in which a beam (6) is housed during said step of holding in position, said compressing and removing step furthermore including removing the beam from the bore of the second tube (32).

3. Process for manufacturing an electrochemical reactor (4) according to Claim 1 or 2, wherein the first tube (31) and the shaft (32) that are held in position have an electrically insulating external surface.

4. Process for manufacturing an electrochemical reactor (4) according to any one of the preceding claims, wherein the first and second orifices of said bipolar plates and said stacked membrane/electrodes assemblies are positioned at opposite ends of these bipolar plates and these membrane/electrodes assemblies, respectively.

5. Process for manufacturing an electrochemical reactor (4) according to any one of the preceding claims, furthermore comprising a step of holding in position first and second anchors extending parallelly to the first tube (31), said compressing of the stack being carried out by applying a traction to said first and second anchors using said first and second mechanical components.

6. Process for manufacturing an electrochemical reactor (4) according to any one of the preceding claims, wherein the adjustment between the first tube (31) and the beam housed in its bore (33) is of sliding type.

7. Process for manufacturing an electrochemical reactor (4) according to any one of the preceding claims, wherein the section of the first orifice (51) of the bipolar plates (5) and of the membrane/electrodes assemblies (110) of the stack is at least three times the cross section of the first tube (31).

8. Process for manufacturing an electrochemical reactor (4) according to any one of the preceding claims, wherein the cross section of the bore (33) of the held-in-position first tube (31) is at least equal to 50% of the cross section of the first tube (31).

9. Process for manufacturing an electrochemical reactor according to any one of the preceding claims, wherein said held-in-position first tube (31) includes a peripheral wall (34) delimiting said bore (33), said peripheral wall being porous.

10. Process for manufacturing an electrochemical reactor according to any one of Claims 1 to 8, wherein said held-in-position first tube (31) includes a peripheral wall (34) delimiting said bore (33), said peripheral wall including a plurality of orifices (36) passing therethrough and distributed in said same direction.

11. Process for manufacturing an electrochemical reactor according to any one of the preceding claims, which comprises connecting said flow circuit to a fuel source, an oxidant source or a source of cooling fluid.

12. Process for manufacturing an electrochemical reactor (4) according to any one of the preceding claims, wherein the periphery of each first orifice (51) of said bipolar plates and said membrane/electrodes assemblies of the formed stack makes contact with said first tube (31) and wherein the periphery of each second orifice (52) of said bipolar plates and said membrane/electrodes assemblies of the formed stack makes contact with said shaft (32).
